(19) Europäisches Patentamt / European Patent Office / Office européen des brevets

(11) **EP 3 262 896 B1**

(12) **EUROPÄISCHE PATENTSCHRIFT**

(45) Veröffentlichungstag und Bekanntmachung des Hinweises auf die Patenterteilung:
**20.05.2020   Patentblatt 2020/21**

(21) Anmeldenummer: **16702947.9**

(22) Anmeldetag: **04.02.2016**

(51) Int Cl.:
***H05B 33/08*** (2020.01)

(86) Internationale Anmeldenummer:
**PCT/EP2016/052411**

(87) Internationale Veröffentlichungsnummer:
**WO 2016/134945 (01.09.2016 Gazette 2016/35)**

(54) **SCHALTREGLER ZUM BETREIBEN VON LEUCHTMITTELN MIT SPITZENSTROMWERTSTEUERUNG UND MITTELSTROMWERTERFASSUNG**

SWITCHING REGULATOR FOR OPERATING LUMINAIRES, FEATURING PEAK CURRENT VALUE CONTROLLING AND MEAN CURRENT VALUE DETECTION

RÉGULATEUR POUR FAIRE FONCTIONNER DES MOYENS D'ÉCLAIRAGE AVEC UNE COMMANDE DE VALEUR D'INTENSITÉ DE POINTE ET DÉTECTION DE VALEUR MOYENNE D'INTENSITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2015   DE 102015203249**
**30.11.2015   DE 102015223723**

(43) Veröffentlichungstag der Anmeldung:
**03.01.2018   Patentblatt 2018/01**

(73) Patentinhaber: **Tridonic GmbH & Co. KG**
**6851 Dornbirn (AT)**

(72) Erfinder:
• **SCHÖNBERGER, John**
**8864 Reichenburg (CH)**
• **DUMKA, Thomas**
**6844 Altach (AT)**
• **MITTERBACHER, Andre**
**6850 Dornbirn (AT)**
• **SACCAVINI, Lukas**
**6850 Dornbirn (AT)**

(74) Vertreter: **Rupp, Christian**
**Mitscherlich PartmbB**
**Patent- und Rechtsanwälte**
**Sonnenstraße 33**
**80331 München (DE)**

(56) Entgegenhaltungen:
**EP-A1- 2 341 760        EP-A2- 2 512 208**
**US-A1- 2008 278 086**

EP 3 262 896 B1

**Beschreibung**

Die vorliegende Erfindung betrifft einen Schaltregler zum Betreiben von Leuchtmitteln und ein Verfahren zum Steuern eines solchen Schaltreglers. Die Erfindung betrifft insbesondere Schaltregler, die in Betriebsgeräten zum Versorgen einer oder mehrerer Leuchtdioden eingesetzt werden.

Ein Betriebsgerät zum Versorgen einer oder mehrerer Leuchtdioden ist aus der WO 2013/152368 A1 bekannt. Solche Betriebsgeräte dienen hauptsächlich dazu, eine gewünschte Energieversorgung für das Leuchtmittel, wie zum Beispiel eine Leuchtdiode (LED) oder mehrere in Serie und/oder parallel verschaltete Leuchtdioden, bereitzustellen. Zusätzliche Funktionen, wie das Dimmen der Leuchtmittel, die Veränderung/Anpassung der Lichtfarbe oder die Kompensation von Schwankungen der Eingangsspannung, können in dem Betriebsgerät vorgesehen sein.

Die Lichtabstrahlung einer Leuchtdiode hängt vom Stromfluss durch die Leuchtdiode ab. Zur Helligkeitssteuerung oder Helligkeitsregelung werden Leuchtdioden daher typischerweise in einem Modus betrieben, in dem der Stromfluss durch die Leuchtdiode durch das Betriebsgerät gesteuert oder geregelt wird.

Zur Ansteuerung von Leuchtdioden können Schaltregler verwendet werden, beispielsweise Aufwärtswandler oder Abwärtswandler, die in der Technik auch als Boost-Konverter bzw. Buck-Konverter bezeichnet werden. In einem derartigen Schaltregler steuert eine Steuereinrichtung einen schnellen Schalter an, der im eingeschalteten Zustand einen Stromfluss durch eine Spule (beim Buck-Konverter auch durch die Leuchtdiode) bewirkt. Nach dem Ausschalten treibt die Spule (beim Buck-Konverter) den Strom weiter durch die Leuchtdiode.

Für die Steuerung- oder Regelung wird von der Steuerschaltung des Schaltreglers eine Vielzahl von Messgrößen erfasst, um Abweichungen von vorgegebenen Betriebsparametern, wie Lichtfarbe und Helligkeit, oder Verschiebungen im Lichtspektrum bei unterschiedlichen Dimmpegeln, entgegenwirken zu können.

Für die Erfassung der Messgrößen und das Erzeugen von entsprechenden Signalen, die der Steuerschaltung zuführbar bzw. von dieser verarbeitbar sind, werden zusätzliche Bauteile/Schaltungen benötigt, was den Aufbau des Schaltreglers insgesamt komplex und teuer macht.

Die Schaltregler werden je nach Anwendung im kontinuierlichen Betriebsmodus, bei dem der Schalter wiedereingeschaltet wird, bevor der Strom durch die Spule auf null abgesunken ist, im Grenzbetrieb, bei dem der Schalter wiedereingeschaltet wird, sobald der Spulenstrom auf null abgesunken ist oder die Nulllinie mit einer positiven Flanke erreicht, oder im diskontinuierlichen Betriebsmodus betrieben werden, bei dem der Schalter nicht sofort wiedereingeschaltet wird, sobald der Spulenstrom auf null abgesunken ist bzw. die Nulllinie mit einer positiven Flanke erreicht.

Im kontinuierlichen Betriebsmodus (nichtlückender Betrieb) und im Grenzbetrieb kann ein Dimmen der Leuchtdiode bzw. eine Änderung der Abgabeleistung des Schaltreglers sehr einfach über eine Änderung des Schwellenwerts des Spulenstroms, bei dem der Schalter ausgeschaltet wird, erfolgen. Jedoch können bei niedrigem Dimmpegel bzw. niedrigen Abgabeströmen an die Leuchtdiode Probleme auftreten.

So ist ein Absenken der Abschaltschwelle im Grenzbetrieb oft nicht beliebig möglich, da es bei kleinen Schwellenwerten zu Problemen hinsichtlich der Erfassung und Verarbeitung des geringen Stromwerts kommen kann. Für niedrige Abgabeströme wird außerdem für den kontinuierlichen Betriebsmodus eine große Spule benötigt, was den Konverter teuer macht und seine Abmessungen vergrößert.

Sheng Liu et al.: "An adaptive on-time controlled boost LED driver with high dimming ratio", IECON 2012 - 38th Annual Conference on IEEE Industrial Electronics Society, vol., no., pp.210,214, 25-28 Oct. 2012 beschreibt ein Betriebsgerät für Leuchtdioden, bei dem ein Boost-Konverter bei hohen Lastanforderungen bzw. geringer Dimmung im kontinuierlichen Betriebsmodus und bei niedrigen Lastanforderungen bzw. großer Dimmung im diskontinuierlichen Betriebsmodus mit einer Pulsfrequenzmodulation arbeitet. Mit diesem Betriebsgerät bzw. Boost-Konverter ist eine genaue Steuerung/Regelung der Helligkeit auch bei niedrigen Lastanforderungen möglich. Es wird auch keine große Spule für niedrige Abgabeströme benötigt.

Jedoch werden für die Steuerung des Umschaltens zwischen den Betriebsmodi und die Realisierung der Pulsfrequenzmodulation bei dem beschriebenen Betriebsgerät zusätzliche Bauteile/Schaltungen benötigt, was den Aufbau des Betriebsgeräts insgesamt komplex und teuer macht. EP2512208 A2 offenbart einen Konverter, der im kontinuierlichen Betriebsmodus und im diskontinuierlichen Betriebsmodus arbeitet.

Der Erfindung liegt die Aufgabe zugrunde, Vorrichtungen anzugeben, die die beschriebenen Probleme verringern. Aufgabe ist es insbesondere, einen Schaltregler und ein Betriebsgerät zum Steuern eines Schaltreglers für den Betrieb von einem oder mehreren Leuchtmitteln bereitzustellen, die eine genaue Steuerung und Regelung mit einem einfachen und kostengünstigen Aufbau erlauben.

Diese Aufgabe wird gemäß den Merkmalen der unabhängigen Ansprüche gelöst. Die Erfindung wird durch die Merkmale der abhängigen Ansprüche weitergebildet.

Gemäß der vorliegenden Erfindung weist ein Schaltregler, insbesondere z.B. ein Abwärtswandler, zum Betreiben von einem oder mehreren Leuchtmitteln eine Steuerschaltung, die einen mit einer Spule gekoppelten Schalter des Schaltreglers ansteuert, und Mittel zum direkten oder indirekten Erfassen des durch die Spule fließenden Stroms und zur Zuführung eines diesen Strom wiedergebenden Signals an die Steuerschaltung auf. Dabei wird der Schalter ausgeschaltet, wenn das Signal anzeigt, dass der Strom eine Abschaltschwelle erreicht hat. Die Steuerschaltung ist ausgelegt, mittels Ansteuerung des Schalters den Schaltregler in einem Grenzbetriebsmodus zu betreiben, wenn die durch das oder die mehreren Leuchtmittel gebildete Last so hoch ist, dass die sich ergebende Abschaltschwelle über einem vorgegebenen Mindestwert der Abschaltschwelle liegt, und in einem diskontinuierlichen Betriebsmodus mit dem Mindestwert der Abschaltschwelle zu betreiben, wenn die durch das oder die mehreren Leuchtmittel gebildete Last so niedrig ist, dass die sich bei einem Grenzbetriebsmodus ergebende Abschaltschwelle unter dem vorgegebenen Mindestwert der Abschaltschwelle liegen würde, wobei das Signal sowohl im Falle des Grenzbetriebsmodus als auch im Falle des diskontinuierlichen Betriebsmodus der Steuerschaltung zugeführt wird, ohne extern einer Mittelwertbildung unterzogen zu werden. D.h. die Steuerschaltung ist so eingerichtet, dass sie sowohl im Grenzbetriebsmodus als auch im diskontinuierlichen Modus den Schalter auf Basis des zugeführten, den Strom wiedergebenden Signals ansteuert.

Somit kann der Schaltregler bei höherer Last im Grenzbetriebsmodus betrieben werden, was eine einfache und genaue Steuerung des Stroms durch das oder die Leuchtmittel mittels der Änderungen der Abschaltschwelle erlaubt. Fällt der Maximalwert des Stroms durch das oder die mehreren Leuchtmittel bzw. die Abschaltschwelle aufgrund von unterschiedlichen Lastanforderungen, wie Dimmen, auf einen so geringen Wert, dass eine weitere Verringerung zu Problemen hinsichtlich der Erfassung, Verarbeitung, etc. dieses geringen Stromwerts führen würde, erfolgt ein Umschalten in einen diskontinuierlichen Betriebsmodus, bei dem dann allein die Totzeit des Stroms die Stellgröße darstellt.

Gemäß der vorliegenden Erfindung weist ein Schaltregler zum Betreiben von einem oder mehreren Leuchtmitteln eine Steuerschaltung auf, die einen mit einer Spule gekoppelten Schalter des Schaltreglers ansteuert, und Mittel zum direkten oder indirekten Erfassen des durch die Spule fließenden Stroms und zur Zuführung eines diesen Strom wiedergebenden Signals an die Steuerschaltung auf, wobei der Schalter ausgeschaltet wird, wenn das Signal anzeigt, dass der Strom eine Abschaltschwelle erreicht hat. Die Steuerschaltung ist dazu ausgelegt, mittels Ansteuerung des Schalters den Schaltregler in einem Grenzbetriebsmodus zu betreiben, wenn die durch das oder die mehreren Leuchtmittel gebildete Last so hoch ist, dass die sich ergebende Abschaltschwelle über einem vorgegebenen Mindestwert liegt, und in einem diskontinuierlichen Betriebsmodus mit dem Mindestwert der Abschaltschwelle abwechselnd mit dem Grenzbetriebsmodus zu betreiben, wenn die durch das oder die mehreren Leuchtmittel gebildete Last so niedrig ist, dass die sich bei einem Grenzbetriebsmodus ergebende Abschaltschwelle unter dem vorgegeben Mindestwert der Abschaltschwelle liegen würde. Das den Strom wiedergebende Signal kann sowohl im Falle des Grenzbetriebsmodus wie auch im Falle des diskontinuierlichen Betriebsmodus der Steuerschaltung zugeführt werden, ohne extern einer Mittelwertbildung unterzogen zu werden.

Beim diskontinuierlichen Betriebsmodus kann es, wenn der Zeitpunkt des Wiedereinschaltens neben der Lastanforderung/Dimmpegelvorgabe auch vom Spannungsverlauf (Nulldurchgang oder Spannungsminimum) über dem Schalter abhängt, zu einem verspäteten Wiedereinschalten und somit zu einem geringeren Strommittelwert als gewünscht kommen. Durch das Abwechseln von dem diskontinuierlichen Betriebsmodus und dem Grenzbetriebsmodus kann dies insbesondere in einem Übergangsbereich durch den erhöhten Strommittelwert in dem darauffolgenden Grenzbetriebsmodus ausgeglichen werden.

Die Steuerschaltung kann dazu ausgelegt sein, von dem Betrieb, in dem der Schaltregler in dem diskontinuierlichen Betriebsmodus mit dem Mindestwert der Abschaltschwelle abwechselnd mit dem Grenzbetriebsmodus betrieben wird, in einen Betrieb, in dem der Schaltregler in dem diskontinuierlichen Betriebsmodus mit dem Mindestwert der Abschaltschwelle und nicht abwechselnd mit dem Grenzbetriebsmodus betrieben wird, zu wechseln, wenn ein erstes Steuersignal von der Steuerschaltung empfangen wurde oder wenn der Zeitabschnitt $T_{Period}$, in dem die Steuerschaltung den Schalter ein, aus und wieder einschaltet, einen Maximalwert annimmt.

Die Steuerschaltung kann dazu ausgelegt sein, von dem Betrieb, in dem der Schaltregler in dem diskontinuierlichen Betriebsmodus mit dem Mindestwert der Abschaltschwelle nicht abwechselnd mit dem Grenzbetriebsmodus betrieben wird, in den Betrieb, in dem der Schaltregler in dem diskontinuierlichen Betriebsmodus mit dem Mindestwert der Abschaltschwelle abwechselnd mit dem Grenzbetriebsmodus betrieben wird, zu wechseln, wenn ein zweites Steuersignal von der Steuerschaltung empfangen wurde oder wenn der Zeitabschnitt $T_{Period}$, in dem die Steuerschaltung den Schalter ein, aus und wieder einschaltet, einen Minimalmalwert annimmt.

Das oder die mehreren Leuchtmittel können Leuchtdioden sein.

Die Steuerschaltung kann einen Komparator zum Vergleichen des Signals mit einem den Mindestwert repräsentierenden Signal aufweisen.

Die Steuerschaltung kann dazu eingerichtet sein, in dem Grenzbetriebsmodus die Abschaltschwelle entsprechend einem empfangenen Dimmsignal zu ändern.

Die Steuerschaltung kann dazu eingerichtet sein, in dem diskontinuierlichen Betriebsmodus einen Strommittelwert $I_{avg}$ für den Zeitabschnitt $T_{Period}$ in dem die Steuerschaltung den Schalter ein, aus und wieder einschaltet entsprechend der Gleichung: $I_{avg} = 0,5 \cdot I_{Peak} \cdot T_{Active} / T_{Period}$ zu ermitteln und den Zeitpunkt des Wiedereinschaltens des Schalters auf Grundlage des ermittelten Strommittelwerts $I_{avg}$ zu bestimmen, wobei $I_{Peak}$ der vorgegebene Mindestwert der Abschaltschwelle und $T_{Active}$ die Summe der Einschaltdauer $T_{On}$ und der Ausschaltdauer $T_{Off}$ des Schalters sind. Somit ist keine zusätzliche Schaltung zur Bestimmung des Strommittelwerts und kein zusätzlicher Eingang (Pin) an der Steuerschaltung zum Eingeben des extern bestimmten Strommittelwerts nötig.

Die Steuerschaltung kann dazu eingerichtet sein, in dem diskontinuierlichen Betriebsmodus den Strommittelwert $I_{avg}$ nach der Ausschaltdauer $T_{Off}$ des Schalters bis zum Zeitpunkt des Wiedereinschaltens des Schalters kontinuierlich zu ermitteln und den ermittelten Strommittelwert $I_{avg}$ kontinuierlich mit einem dem Dimmsignal entsprechenden Wert zu vergleichen, um den Zeitpunkt des Wiedereinschaltens zu bestimmen.

Die Steuerschaltung kann dazu eingerichtet sein, ein den Spannungsverlauf über dem Schalter wiedergebendes Signal zu erfassen und in dem diskontinuierlichen Betriebsmodus den Zeitpunkt des Wiedereinschaltens auf Grundlage des ermittelten Strommittelwerts $I_{avg}$ zu bestimmen.

Gemäß der vorliegenden Erfindung weist ein Schaltregler zum Betreiben von einem oder mehreren Leuchtmitteln eine Steuerschaltung auf, die dazu ausgelegt ist, mittels Ansteuerung eines mit einer Spule gekoppelten Schalters den Schaltregler in einem diskontinuierlichen Betriebsmodus zu betreiben, Mittel zum direkten oder indirekten Erfassen des durch die Spule fließenden Stroms und zur Zuführung eines diesen Strom wiedergebenden ersten Signals an die Steuerschaltung, und Mittel zum direkten oder indirekten Erfassen des von dem Schaltregler abgegebenen und durch das oder die Leuchtmittel fließenden Stroms oder der an das oder die Leuchtmittel abgegebenen Spannung und zur Zuführung eines diesen Strom bzw. der Spannung wiedergebenden zweiten Signals an die Steuerschaltung auf, wobei die Steuerschaltung dazu ausgelegt ist, den Schalter auszuschalten, wenn das erste Signal anzeigt, dass der Strom eine Abschaltschwelle erreicht hat, den Wiedereinschaltzeitpunkt des Schalters auf Grundlage des zweiten Signals zu regeln, und den Verstärkungsfaktor der Regelschleife für den Wiedereinschaltzeitpunkt bei einer in aufeinanderfolgenden Schaltzyklen zunehmenden Zeitspanne, in der der Schalter ausgeschaltet ist, zu erhöhen.

Die Steuerschaltung kann dazu ausgelegt sein, den Wiedereinschaltzeitpunkt des Schalters und/oder die Abschaltschwelle in Abhängigkeit von einem empfangenen Dimmsignal zu ändern, wobei in der Regelschleife das zweite Signal als Regelgröße mit einem empfangenem Dimmsignal verglichen und der Verstärkungsfaktor für die Regelabweichung bei der Zunahme der Zeitspanne vergrößert werden kann.

Gemäß der vorliegenden Erfindung weist ein Schaltregler zum Betreiben von einem oder mehreren Leuchtmitteln eine Steuerschaltung, die dazu ausgelegt ist, mittels Ansteuerung eines mit einer Spule gekoppelten Schalters den Schaltregler in einem diskontinuierlichen Betriebsmodus zu betreiben, Mittel zum direkten oder indirekten Erfassen des durch die Spule fließenden Stroms und zur Zuführung eines diesen Strom wiedergebenden ersten Signals an die Steuerschaltung, und Mittel zum direkten oder indirekten Erfassen des von dem Schaltregler abgegebenen und durch das oder die Leuchtmittel fließenden Stroms oder der an das oder die Leuchtmittel abgegebenen Spannung und zur Zuführung eines diesen Strom bzw. der Spannung wiedergebenden zweiten Signals an die Steuerschaltung auf, wobei die Steuerschaltung dazu ausgelegt ist, den Schalter auszuschalten, wenn das erste Signal anzeigt, dass der Strom eine Abschaltschwelle erreicht hat, die Abschaltschwelle in Abhängigkeit von einem empfangenem Dimmsignal zu verändern, und den Wiedereinschaltzeitpunkt des Schalters auf Grundlage des zweiten Signals zu regeln.

Die Steuerschaltung kann dazu ausgelegt sein, die Abschaltschwelle entsprechen einer Funktion oder einer Tabelle, welche jedem Wert des empfangenen Dimmsignals eine Abschaltschwelle zuordnet, zu setzten.

Die Steuerschaltung kann dazu ausgelegt sein, den Wiedereinschaltzeitpunkt des Schalters in Abhängigkeit von einem empfangenen Dimmsignal zu ändern.

Die Steuerschaltung kann dazu ausgelegt sein, bei einer Änderung des empfangenem Dimmsignals, bis zu einem bestimmten Wert des empfangenem Dimmsignals den Wiedereinschaltzeitpunkt des Schalters bei konstanter Abschaltschwelle zu verändern und unterhalb des bestimmten Werts die Abschaltschwelle bei konstanter Ausschaltzeitspanne des Schalters bzw. bei konstantem Zeitabschnitt, in dem der Strom durch die Spule auf null abfällt und der Schalter wieder eingeschaltet wird, zu verändern.

Der Schaltregler kann ein Abwärts- oder Aufwärtswandler sein.

Gemäß der vorliegenden Erfindung weist ein Betriebsgerät für Leuchtdioden einen der oben beschriebenen Schaltregler auf.

Nachfolgend wird die Erfindung anhand der beiliegenden Zeichnungen näher erläutert. Es zeigen:

Fig. 1 eine Schaltung eines Betriebsgeräts für Leuchtdioden nach einem ersten Ausführungsbeispiel gemäß der vorliegenden Erfindung.

Fig. 2 Diagramme mit Signalverläufen des im Grenzbetriebsmodus betriebenen Schaltreglers nach einem Ausführungsbeispiel gemäß der vorliegenden Erfindung,

Fig. 3 Diagramme mit Signalverläufen des im diskontinuierlichen Betriebsmodus betriebenen Schaltreglers nach einem Ausführungsbeispiel gemäß der vorliegenden Erfindung,

Fig. 4 eine Schaltung eines Betriebsgeräts für Leuchtdioden nach einem zweiten Ausführungsbeispiel gemäß der vorliegenden Erfindung,

Fig. 5 in einer schematischen Darstellung eine Leuchte mit einem Betriebsgerät gemäß einem Ausführungsbeispiel der vorliegenden Erfindung,

Fig. 6 Diagramme mit Signalverläufen des in Fig. 5 gezeigten und im diskontinuierlichen Betriebsmodus betriebenen Betriebsgeräts,

Fig. 7 ein erstes Ausführungsbeispiel des Schaltreglers der in Fig. 5 gezeigten Leuchte, und

Fig. 8 ein zweites Ausführungsbeispiel des Schaltreglers der in Fig. 5 gezeigten Leuchte.

Komponenten mit gleichen Funktionen sind in den Figuren mit gleichen Bezugszeichen gekennzeichnet.

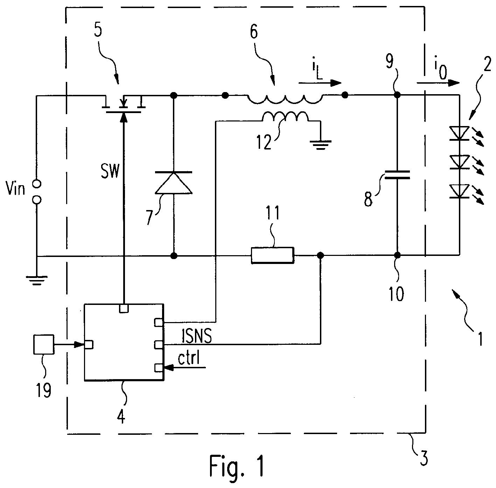

Fig. 1 zeigt eine Schaltung eines Betriebsgeräts 1 für Leuchtmittel 2 nach einem ersten Ausführungsbeispiel gemäß der vorliegenden Erfindung, das einen Schaltregler 3 mit einer Steuerschaltung 4 und einen Abwärtswandler als Konverter umfasst. Das Leuchtmittel 2 kann eine Leuchtdiode (LED) oder mehrere LEDs umfassen. Die LEDs können anorganische oder organische LEDs sein. Die mehreren LEDs können in Serie oder parallel geschaltet sein. Die mehreren LEDs können auch in komplexeren Anordnungen verschaltet sein, beispielsweise in mehreren zueinander parallel geschalteten Reihenschaltungen. Während beispielhaft drei LEDs dargestellt sind, kann das Leuchtmittel auch nur eine LED, zwei LEDs oder mehr als drei LEDs aufweisen.

Das Betriebsgerät 1, Betriebsschaltung, dient zum Betrieb der wenigstens einen LED 2. Dem Betriebsgerät 1 wird eine Versorgungsspannung Vin zugeführt, die eine Gleichspannung oder eine gleichgerichtete Wechselspannung sein kann. Das Betriebsgerät 1 kann eine Leistungsfaktorkorrekturschaltung umfassen, welche die Versorgungsspannung Vin bereitstellt (nicht gezeigt).

Der steuerbare Schalter 5 und die Spule 6 sind in Reihe zwischen den Eingang und den Ausgang des Schaltreglers 3 geschaltet. Wenn die wenigstens eine LED 2 mit dem Schaltregler 3 verbunden ist, sind der steuerbare Schalter 5, die Spule 6 und die wenigstens eine LED 2 in Reihe geschaltet. Eine Diode 7 ist parallel zu der wenigstens einen LED 2 und der Spule 6 geschaltet. Ein Kondensator 8 kann parallel zu den Ausgangsanschlüssen 9, 10 geschaltet sein, so dass der Kondensator 8 parallel zu der wenigstens einen LED 2 geschaltet ist. Der Kondensator 8 ist ein optionales Element der gezeigten Schaltung. Der Kondensator 8 kann bei weiteren Ausführungsbeispielen weggelassen werden.

Der steuerbare Schalter 5 kann ein Leistungsschalter sein. Der steuerbare Schalter 5 kann ein Feldeffekttransistor oder ein Bipolartransistor sein. Der steuerbare Schalter 5 kann ein Transistor mit isolierter Gateelektrode sein.

Die Steuerschaltung 4 kann den Schalter 5 des als Abwärtswandler ausgebildeten Konverters des Schaltreglers 3 in einem gepulsten Betrieb betreiben, so dass jeweils ein Ausgangsstrom in Form von Pulspaketen bereitgestellt wird. Beispielsweise können bei kleineren Dimmleveln Pulspakete erzeugt werden, um die gemittelte Stromstärke und somit die vom Auge wahrgenommene Helligkeit einzustellen.

Die Steuerschaltung 4 kann eine integrierte Halbleiterschaltung sein oder eine integrierte Halbleiterschaltung umfassen. Die Steuerschaltung 4 kann als ein Prozessor, ein Mikroprozessor, ein Controller, ein Mikrocontroller oder eine anwendungsspezifische Spezialschaltung (ASIC, "Application Specific Integrated Circuit") oder eine Kombination der genannten Einheiten ausgestaltet sein.

Im eingeschalteten Zustand des steuerbaren Schalters 5 fließt ein Strom $i_L$ durch die LED(s) 2 und durch die Spule 6, die dadurch magnetisiert wird. Die Spule 6 wird dadurch mit Energie geladen. Die Diode 7 sperrt in diesem Zustand. Nach dem Ausschalten des steuerbaren Schalters 5 treibt die Spule 5 den durch sie fließenden Strom $i_L$ weiter durch die LED(s) 2 und die Diode 7. Die im Magnetfeld der Spule 5 gespeicherte Energie entlädt sich. Parallel dazu kann am Beginn des Einschaltens des steuerbaren Schalters 5 der Kondensator 8 geladen werden. Während der Ausschaltphase des steuerbaren Schalters 5, der so genannten Freilaufphase, kann sich der Kondensator 8 entladen und trägt zum Stromfluss durch die LED(s) 2 bei. Bei geeigneter Dimensionierung des Kondensators 8 kann dies zu einer Glättung des Stroms durch die LED(s) 2 führen.

Der aktuelle Spulenstrom $i_L$ kann während der Einschaltphase mittels der über einen Messwiderstand 11 abfallenden Spannung erfasst werden. Der aktuelle Spulenstrom $i_L$ kann insbesondere während der Ausschaltphase mit einer weiteren Induktivität 12, die magnetisch mit der Spule 6 gekoppelt ist, der Steuerschaltung 4 zugeführt und überwacht werden. Alternativ kann auch ein Strommesstransformator (nicht gezeigt) zur Erfassung des aktuellen Spulenstroms $i_L$ vorhanden sein, der in Serie zu der Spule 6 angeordnet ist.

Die Steuerschaltung 4 vergleicht den aktuellen Spulenstrom $i_L$ bzw. die den Spulenstrom $i_L$ wiedergebende, an dem Widerstand 11 abfallende Spannung ISNS mit einem oberen Schaltschwellenwert $I_{peak}$ und bewirkt ein Ausschalten des Schalters 5, wenn der Spulenstrom $i_L$ den oberen Schaltschwellenwert $I_{peak}$ (Abschaltschelle) erreicht. Für das Wiedereinschalten des Schalters 3 vergleicht die Steuerschaltung 4 den aktuellen Spulenstrom $i_L$ mit einem unteren Schaltschwellenwert $I_{low}$ und bewirkt ein Einschalten des Schalters 5, wenn der Spulenstrom $i_L$ den unteren Schaltschwellenwert $I_{low}$ erreicht, insbesondere, wenn der ansteigende Spulenstrom $i_L$, eine ansteigende Flanke des Spulenstroms $i_L$, den unteren Schaltschwellenwert $I_{low}$ erreicht (low/high transition).

Der obere und/oder untere Schaltschwellenwert $I_{Peak}$, $I_{low}$ kann intern durch die Steuerschaltung 4 erzeugt werden oder kann durch eine externe Signalquelle 19 bereitgestellt werden.

In einer möglichen Ausführungsform kann mittels der Überwachung über die weitere Induktivität 12 festgestellt werden, wann der Spulenstrom $i_L$ während der Entladephase (Ausschaltphase) auf null abgefallen ist (und somit die Spule 6 entmagnetisiert ist). In diesem Falle wäre der untere Schaltschwellenwert $I_{low}$ gleich null. Die Steuerschaltung 4 kann ein Signal sw zum Ansteuern des steuerbaren Schalters 5 ausgeben.

Die Steuerschaltung 4 kann einen den Dimmlevel festlegenden Befehl ctrl an einer Schnittstelle empfangen. Alternativ oder zusätzlich kann die Betriebsschaltung 10 eingerichtet sein, um den Dimmlevel abhängig von wenigstens einem Sensorsignal zu bestimmen. Beispielsweise kann für eine Helligkeitsregelung eine Ist-Helligkeit mit einem Sensor erfasst und ein Dimmlevel abhängig von einem Vergleich von Ist-Helligkeit und Soll-Helligkeit festgelegt werden. Alternativ oder zusätzlich kann die Steuerschaltung 4 eingerichtet sein, um einen Dimmlevel abhängig von einer Betätigung eines Betätigungselements (nicht gezeigt), beispielsweise eines Tasters, Drehknopfes oder Schalters, zu ermitteln.

Die Steuerschaltung 4 ist dazu ausgelegt, mittels Ansteuerung des Schalters 5 den Abwärtswandler in einem Grenzbetriebsmodus zu betreiben, wenn die durch die LED(s) 2 gebildete Last so hoch ist, dass die sich ergebende Abschaltschwelle über einem vorgegeben Mindestwert der Abschaltschwelle liegt, und in einem diskontinuierlichen Betriebsmodus mit dem Mindestwert der Abschaltschwelle zu betreiben, wenn die durch die LED(s) 2 gebildete Last so niedrig ist, dass die sich bei einem Grenzbetriebsmodus ergebende Abschaltschwelle unter dem vorgegeben Mindestwert der Abschaltschwelle liegen würde.

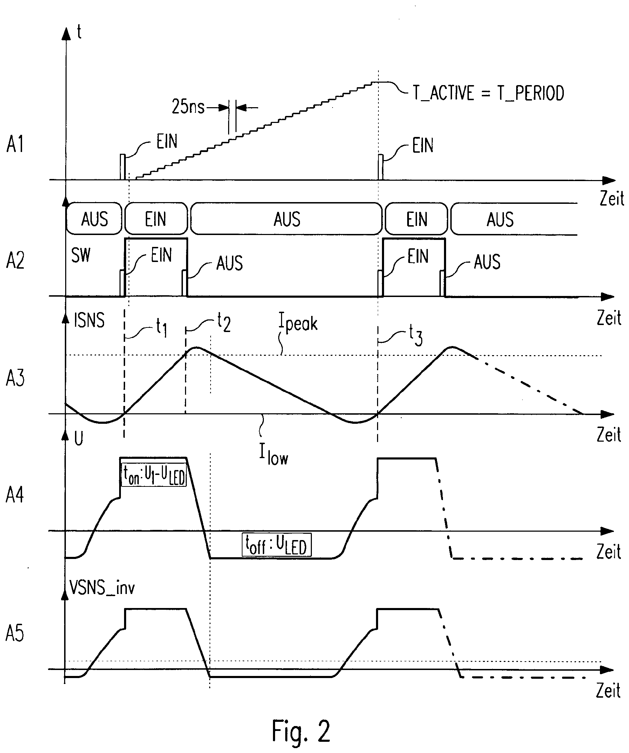

Fig. 2 zeigt Signalverläufe des im Grenzbetriebsmodus betriebenen Schaltreglers 3. Das Diagramm A1 zeigt den Zeitverlauf eines Ein- und Ausschaltzyklus bzw. dessen zeitliche Erfassung durch die Steuerschaltung 4. Das Diagramm A2 zeigt die von der Steuerschaltung 4 erzeugten Ein- und Ausschaltimpulse und das von der Steuerschaltung 4 daraufhin abgegebene Signal sw zum Ansteuern des steuerbaren Schalters 5. Das Diagramm A3 zeigt den Zeitverlauf des Signals ISNS, das den durch die LED(s) fließenden Strom wiedergibt und das mittels des Widerstandes 11 erzeugt und der Steuerschaltung 4 zugeführt wird.

Wie in den Diagrammen A2 und A3 der Fig. 2 zu sehen, erzeugt die Steuerschaltung 4 den Einschaltimpuls, wenn das ansteigende Signal ISNS den unteren Schaltschwellenwert $I_{low}$ (low/high transition) erreicht (Zeitpunkt $t_1$). Das Signal sw zum Ansteuern des Schalters wechselt vom Ausschaltsignal zum Einschaltsignal. Erreicht die ansteigende Flanke des Signals ISNS den oberen Schaltschwellenwert $I_{peak}$ (Zeitpunkt $t_2$), erzeugt die Steuerschaltung 4 den Ausschaltimpuls, das Signal sw zum Ansteuern des Schalters wechselt vom Einschaltsignal zum Ausschaltsignal. Die Periode des Signals ISNS ($T_{Period}$) entspricht der Summe ($T_{Active}$) der Einschaltdauer $T_{On}$ und der Ausschaltdauer $T_{Off}$ des Schalters 5 (Zeitspanne von $t_1$ bis $t_3$).

Der sich während des zickzackförmigen zeitlichen Verlaufs des Signals ISNS ergebende Mittelwert des Stroms stellt eine von der Steuerschaltung 4 zu steuernde bzw. zu ermittelnde Größe dar. Der Strommittelwert $I_{avg}$ kann entsprechend der Gleichung:

$$I_{avg} = 0,5 \cdot I_{Peak} \tag{1}$$

ermittelt werden. Die Steuerschaltung 4 steuert entsprechend der Gleichung (1) den gewünschten Mittelwert des Stroms durch die LED(s) 2 mittels einer Veränderung der oberen Abschaltschwelle $I_{Peak}$ und abhängig von einem vorgegebenen Soll-Mittelwert.

Die obere Abschaltschwelle $I_{Peak}$ (Ausschaltschwelle) kann jedoch nicht beliebig abgesenkt werden, da es bei geringen Stromwerten zu Problemen hinsichtlich der Erfassung und Verarbeitung des geringen Stromwerts kommen kann.

Gemäß der vorliegenden Erfindung wechselt die Steuerschaltung 4, von dem Grenzbetriebsmodus in den diskontinuierlichen Betriebsmodus, wenn bei einem geforderten Absenken der Abschaltschwelle $I_{Peak}$ diese unter einem vorgegeben Mindestwert liegen würde.

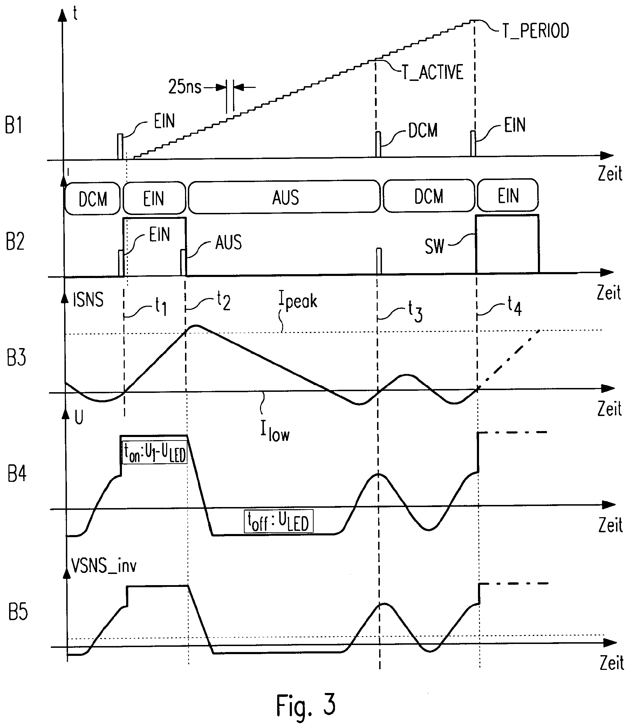

Fig. 3 zeigt Signalverläufe des im diskontinuierlichen Betriebsmodus betriebenen Schaltreglers 3. Das Diagramm B1 zeigt den Zeitverlauf des lückenden Betriebs bzw. dessen zeitliche Erfassung durch die Steuerschaltung 4. Das Diagramm B2 zeigt die von der Steuerschaltung 4 erzeugten Ein- und Ausschaltimpulse und das von der Steuerschaltung 4 daraufhin abgegebene Signal sw zum Ansteuern des steuerbaren Schalters 5. Das Diagramm B3 beschreibt den Zeitverlauf des Signals ISNS, das den durch die LED(s) fließenden Strom wiedergibt und das mittels des Widerstandes 11 erzeugt und der Steuerschaltung 4 zugeführt wird.

Die Abschaltschwelle $I_{Peak}$ im Diagramm B3 entspricht dem vorgegebenen Mindestwert. Eine Veränderung des Strommittelwerts $I_{avg}$ steuert die Steuerschaltung 4 über eine entsprechende Veränderung der Länge des Zeitintervalls $t_3$ bis $t_4$.

Der zu steuernde Strommittelwert $I_{avg}$ kann im diskontinuierlichen Betriebsmodus entsprechend der Gleichung:

$$I_{avg} = 0,5 \cdot I_{Peak} \cdot T_{Active} / T_{Period} \qquad (2)$$

ermittelt werden, wobei $I_{Peak}$ hier der vorgegebene Mindestwert der Abschaltschwelle, $T_{Active}$ die Summe der Einschaltdauer $T_{On}$ und der Ausschaltdauer $T_{Off}$ des Schalters 5 (Zeitspanne von $t_1$ bis $t_3$), und $T_{Period}$ die Periode des Signals ISNS (Zeitspanne von $t_1$ bis $t_4$) sind. Die Steuerschaltung 4 steuert entsprechend der Gleichung (2) den gewünschten Mittelwert des Stroms durch die LED(s) 2 mittels einer Veränderung der Länge der Zeitspanne $t_3$ bis $t_4$.

Wie in Fig. 3 gezeigt, schaltet die Steuerschaltung 4 den Schalter 5 zum Zeitpunkt $t_1$ ein und zum Zeitpunkt $t_2$, an dem das Signal ISNS den oberen Schaltschwellenwert $I_{peak}$ erreicht, den Schalter 5 aus. Zum Zeitpunkt $t_1$ kann ein Zähler oder jeweils ein Zähler zum Bestimmen von $T_{Active}$ und $T_{Period}$ gestartet werden. Der Strommittelwert $I_{avg}$ zum Zeitpunkt $t_3$ kann von der Steuerschaltung 4 mittels der Gleichung (1) bestimmt werden. Erreicht die ansteigende Flanke des Signals ISNS den unteren Schaltschwellenwert $I_{low}$ (Zeitpunkt $t_3$) wird $T_{Active}$ durch Auslesen des Zählers bestimmt. Ab dem Zeitpunkt t3 kann der aktuelle Strommittelwert $I_{avg}$ kontinuierlich mit der Gleichung (2) bestimmt werden, wobei der Term $0,5 \cdot I_{Peak} \cdot T_{Active}$ der Gleichung (2) bekannt ist und $T_{Period}$ durch Auslesen des Zählers bestimmt und in die Gleichung (2) eingesetzt wird. Wird der vorgegebene Strommittelwert $I_{avg}$ erreicht (Zeitpunkt $t_4$), schaltet die Steuer-schaltung 4 den Schalter 5 wieder ein. Der beschriebene Zyklus beginnt erneut. Alternativ kann ab dem Zeitpunkt t3 der Wiedereinschaltzeitpunkt $t_4$ (entspricht $T_{Period}$) mit der Gleichung (2) bestimmt werden.

Gemäß der vorliegenden Erfindung erfolgt in dem gezeigten Ausführungsbeispiel keine externe Ermittlung des Strommittelwerts $I_{avg}$, weder im Grenzbetriebsmodus noch im diskontinuierlichen Betriebsmodus. An der Steuerschaltung 4 ist nur ein Anschluss/Eingang (Pin) zum Erfassen des Signals ISNS bzw. zum Erfassen des Stromflusses durch die LED(s) 2 nötig. Die Anzahl der Anschlüsse der Steuerschaltung 4 für eine Erfassung der Messgrößen kann reduziert werden. Der Strommittelwert $I_{avg}$ wird von der Steuerschaltung 4 sowohl im Grenzbetriebsmodus als auch im diskontinuierlichen Betriebsmodus mittels des Signals ISNS bestimmt. Es werden dafür keine zusätzlichen Bauteile/Schaltungen benötigt, was den Aufbau des Abwärtswandlers 3 vereinfacht und kostengünstiger macht.

Wie in Fig. 3 gezeigt, können nach dem Ausschalten zum Zeitpunkt $t_3$ Oszillationen des Stromes auftreten, die durch einen aus der Spule 6, dem Kondensator 8 und anderen Kapazitäten (nicht gezeigt) gebildeten Resonanzkreis bedingt sind. Die Oszillationen des Stromes durch die Spule 5 können mittels des Signals ISNS oder mittels einer mit der Spule 6 induktiv gekoppelten Erfassungsspule 12 erfasst und von der Steuerschaltung 4 detektiert werden.

Um Schaltverluste des Schalters 5 zu vermeiden, sollten solche Oszillationen beim Wählen des Wiedereinschaltzeitpunktes berücksichtigt werden bzw. der Wiedereinschaltzeitpunkt so gewählt werden, dass zum Wiedereinschaltzeitpunkt die Spannungsschwingung über dem Schalter 5 ein Spannungsminimum zeigt. Dies bedeutet jedoch, dass das Wiedereinschalten des Schalters 5 ab dem Zeitpunkt $t_3$ nicht zu einem beliebigen Zeitpunkt erfolgen kann, sondern nur in diskreten Zeitabständen, nämlich immer dann, wenn die Spannungsschwingung über dem Schalter 5 ein Spannungsminimum zeigt.

Wird der Schalter 5 nicht zu dem von der Steuerschaltung 4 nach der Gleichung (2) ermittelten Zeitpunkt auf Grund von Spannungsschwingungen über den Schalter 5 wiedereingeschaltet sondern später, wird der vorgegebene Strommittelwert $I_{avg}$ nicht exakt erreicht und fällt z.B. niedriger aus.

Gemäß der vorliegenden Erfindung erfolgt ein Abwechseln von dem diskontinuierlichen Betriebsmodus und dem Grenzbetriebsmodus, wenn die durch die LED(s) gebildete Last so niedrig ist, dass die sich bei einem Grenzbe-triebsmodus ergebende obere Abschaltschwelle $I_{peak}$ unter dem vorgegeben Mindestwert der Abschaltschwelle $I_{peak}$ liegen würde.

Dieses Abwechseln kann insbesondere in einem Übergangsbereich zu einem genaueren Strommittelwert $I_{avg}$ über zwei Perioden $T_{Period}$ führen, da der aus dem diskontinuierlichen Betriebsmodus resultierende zu niedrige Strommittelwert $I_{avg}$ mit dem im darauffolgenden Grenzbetriebsmodus zu hohen Strommittelwert $I_{avg}$ ausgeglichen werden kann. Dieser Aspekt des Abwechselns von dem diskontinuierlichen Betriebsmodus und dem Grenzbetriebsmodus stellt für sich einen vorteilhaften Aspekt der vorliegenden Erfindung dar. Jedoch wird das Signal ISNS sowohl im Falle des Grenzbetriebsmodus wie auch im Falle des diskontinuierlichen Betriebsmodus der Steuerschaltung zugeführt, ohne einer externen Mittelwertbildung unterzogen zu werden.

Das Ende eines Wechselbetriebs bzw. der Übergang vom Wechselbetrieb zu einem fortwährenden diskontinuierlichen Betriebsmodus kann mittels eines empfangenen Steuersignals ausgelöst werden oder von der Länge des Zeitabschnittes $t_3$ bis $t_4$ oder der Länge der Periode $T_{Period}$ des diskontinuierlichen Betriebsmodus abhängig sein, wobei ein Ende eines Wechselbetriebs bzw. der Übergang vom Wechselbetrieb zu einem fortwährenden diskontinuierlichen Betriebsmodus erfolgt, wenn die Länge einen Maximalwert annimmt. Der Wechsel im Mischbetrieb erfolgt nach jeweils einigen wenigen Schaltzyklen.

In gleicher Weise kann ein Übergang vom einem fortwährenden diskontinuierlichen Betriebsmodus zu dem Wechselbetrieb mittels eines empfangenen Steuersignals ausgelöst werden oder von der Länge des Zeitabschnittes $t_3$ bis $t_4$ oder der Länge der Periode $T_{Period}$ des diskontinuierlichen Betriebsmodus abhängig sein, wobei ein Start eines Wechselbetriebs bzw. der Übergang vom einem fortwährenden diskontinuierlichen Betriebsmodus zum Wechselbetrieb erfolgt, wenn die Länge einen Minimalwert annimmt. Der Minimalwert und der Maximalwert können gleich sein.

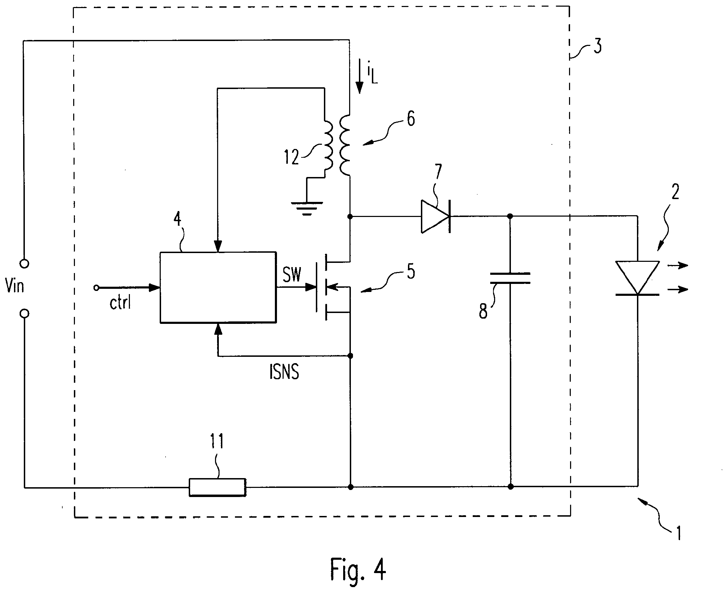

Fig. 4 zeigt eine Schaltung eines Betriebsgeräts 1 für Leuchtmittel 2 nach einem zweiten Ausführungsbeispiel gemäß der vorliegenden Erfindung, das einen Schaltregler 3 mit einer Steuerschaltung 4 und einen Aufwärtswandler als Konverter umfasst. Die Spule 6, der Schalter 5 und der Messwiderstand 11 sind in Reihe zwischen den Eingängen des Schaltreglers 3 angeordnet, so dass ein Strom durch die Spule 6, den Schalter 5 und den Messwiderstand 11 fließt, wenn der Schalter 5 von der Steuerschaltung 4 eingeschaltet wird. Der aktuelle Spulenstrom $i_L$ kann während der Einschaltphase des Schalters 5 mittels der über einen Messwiderstand 11 abfallenden Spannung von der Steuerschaltung 4 erfasst werden. Die Steuerschaltung 4 vergleicht, wie oben beschrieben, den aktuellen Spulenstrom bzw. die den Spulenstrom $i_L$ wiedergebende, an dem Widerstand 11 abfallende Spannung (Signal ISNS) mit dem oberen Schaltschwellenwert Ipeak und bewirkt ein Ausschalten des Schalters 5, wenn der ansteigende Spulenstrom $i_L$ den oberen Schaltschwellenwert Ipeak (Abschaltschwelle) erreicht.

Nach dem Ausschalten des Schalters 12 treibt die Spule nun einen Strom durch die Diode 7 und die Parallelschaltung aus dem Kondensator 8 und der Leuchtdiode 14. Für das Wiedereinschalten des Schalters 3 vergleicht die Steuerschaltung 4 den aktuellen Spulenstrom $i_L$, welcher ebenfalls mittels des Messwiderstands 11 detektiert wird, mit dem unteren Schaltschwellenwert $I_{low}$ und bewirkt ein Einschalten des Schalters 5, wenn der Spulenstrom $i_L$ den unteren Schaltschwellenwert $I_{low}$ erreicht, insbesondere, wenn der wieder ansteigende Spulenstrom $i_L$ mit seiner ansteigende Flanke den unteren Schaltschwellenwert $I_{low}$ erreicht (low/high transition).

Der Zeitpunkt, wann der Stromfluss durch die Spule 6 während der Ausschaltphase auf null abgesunken ist, kann von der Steuerschaltung 4 alternativ oder zusätzlich mittels dem Signal/Spannung, welches von der mit der Spule 6 gekoppelten Induktivität 12 erzeugt wird, bestimmt werden.

Die Steuerung des in Fig. 4 gezeigten Betriebsgeräts 1 im Grenzbetriebsmodus, im diskontinuierlichen Betriebsmodus und im Wechselbetriebsmodus kann analog der Steuerung des in Fig. 1 gezeigten Betriebsgerät 1 erfolgen, wobei bei der Berechnung des Strommittelwerts durch die LED zu beachten ist, dass bei dem in Fig. 4 gezeigten Betriebsgerät 1 eine Speisung der Last bzw. ein Stromfluss durch die Diode 7 nur während der Ausschaltphase (Ausschaltdauer $T_{Off}$) erfolgt.

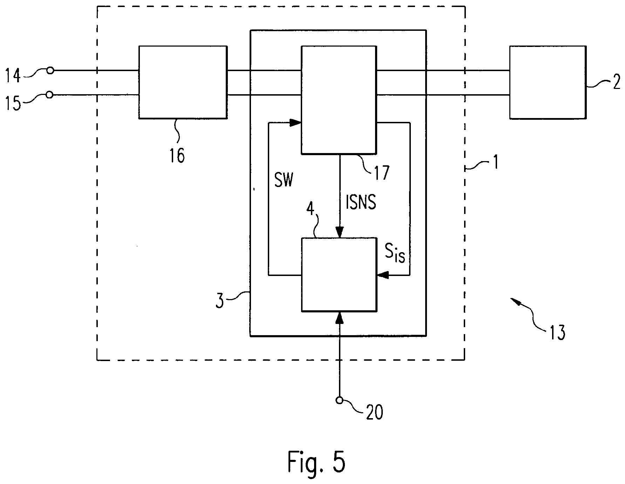

Fig. 5 zeigt in einer schematischen Darstellung eine Leuchte 13 mit einem Leuchtmittel 2 und einem Betriebsgerät 1 gemäß einem Ausführungsbeispiel der vorliegenden Erfindung.

Das Betriebsgerät 1 der in Fig. 5 gezeigten Leuchte 13 dient zum Betrieb des Leuchtmittels 2 an einer Wechselspannung, die dem Betriebsgerät 1 über die Eingangsanschlüsse 14 und 15 zugeführt werden kann. In dem Betriebsgerät 1 wird die Wechselspannung in einer Eingangsschaltung 16 in eine Gleichspannung bzw. eine gleichgerichtete Wechselspannung umgewandelt. Die Eingangsschaltung 16 kann eine Leistungsfaktorkorrekturschaltung für eine Verbesserung des Leistungsfaktors umfassen. Soll die Leuchte 13 an einer Gleichspannung bzw. einem Gleichspannungsnetz betrieben werden, ist eine Gleichrichtung nicht nötig und die Eingangsschaltung 6 kann lediglich Mittel zur Stabilisierung der Eingangsspannung enthalten oder wegelassen werden.

Das Betriebsgerät 1 weist ferner einen aus einem Konverter 17 und der Steuerschaltung 4 bestehenden Schaltregler 3 auf. Der Konverter 17 erzeugt aus der von der Eingangsschaltung 16 abgegebenen Spannung mittels eines Energiespeichers und eines von der Steuerschaltung 4 gesteuerten periodisch arbeitenden elektronischen Schalters eine Betriebsspannung für das Leuchtmittel 2. Der Energiespeicher kann eine Spule sein, deren Stromfluss nach dem Einschalten des mit der Spule gekoppelten Schalters ansteigt und nach dem Ausschalten abfällt.

Der Steuerschaltung 4 kann über einen Signaleingangsanschluss 20 das Dimmsignal zur Einstellung der Helligkeit des Leuchtmittels 2 zugeführt werden. Ein Signal $S_{is}$, das den durch das Leuchtmittel 2 fließenden Strom oder die an das Leuchtmittel 2 abgegebene Spannung anzeigt, und das Signal ISNS, das dem Stromfluss durch den Schalter und/oder den Energiespeicher anzeigt, empfängt die Steuerschaltung 4 von dem Konverter 7. Das Signal Sis bzw. der an das Leuchtmittel 2 von dem Betriebsgerät 1 abgegebene Strom könnte, insbesondere bei Verwendung eines Abwärtswandlers, von der Steuerschaltung auch mittels dem Signal ISNS bestimmt werden.

Gemäß einem Aspekt der vorliegenden Erfindung ist die Steuerschaltung 4 dazu ausgelegt, in einem diskontinuierlichen Betriebsmodus den mit dem Energiespeicher gekoppelten Schalter auszuschalten, wenn das Signal ISNS anzeigt, dass der Strom durch den Schalter bzw. der Strom durch den Energiespeicher eine in Abhängigkeit von dem empfangenem Dimmsignal von der Steuerschaltung 8 gesetzte Abschaltschwelle erreicht hat, und den Wiedereinschaltzeitpunkt des Schalters auf Grundlage des Signals $S_{is}$ zu regeln. Die Steuerschaltung 4 kann dazu ausgelegt sein, den Konverter 7 ausschließlich, d.h. bei jedem von dem empfangenen Dimmsignal angezeigten Dimmlevel, in dem oben beschriebenen diskontinuierlichen Betriebsmodus zu betreiben oder nur für einen bestimmten Dimm- oder Abgabelastbereich.

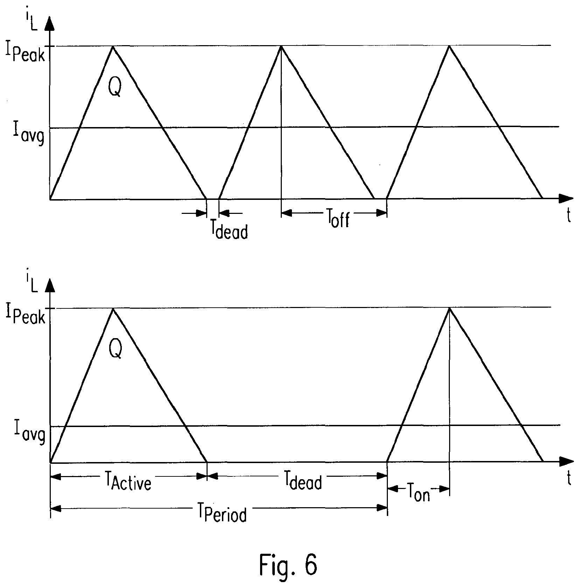

Fig. 6 zeigt zwei Diagramme mit dem zeitlichen Verlauf des durch den Energiespeicher fließenden Stroms $i_L$ mit unterschiedlichen Totzeiten $T_{dead}$ und konstanter Abschaltschwelle $I_{Peak}$ des im diskontinuierlichen Betriebsmodus arbeitenden Betriebsgeräts. In den Diagrammen steigt der Strom durch den Energiespeicher nach dem Einschalten des Schalters an. Beim Erreichen der Abschaltschwelle $I_{Peak}$ wird der Schalter ausgeschaltet, der Energiespeicher entlädt sich und der Strom sinkt auf null ab. Nach Ablauf der von der Steuerschaltung 4 gesetzten Totzeit $T_{dead}$ wird der Schalter wieder eingeschaltet. Die Zeitspannen $T_{on}$, $T_{off}$, $T_{Active}$ und $T_{dead}$ sind die Einschaltdauer des Schalters, Ausschaltdauer des Schalters, die Stromfluss-Dauer durch den Energiespeicher sowie die Schalt-Zyklusdauer. Der Wert $I_{avg}$ ist der mittlere Strom durch den Energiespeicher in den gezeigten Verläufen und ein Maß für die von dem Konverter des Betriebsgeräts 1 an das Leuchtmittel 2 abgegebene Leistung. Wie aus den Diagrammen in Fig. 6 ersichtlich ist, sinkt der mittlere Stromwert $I_{avg}$ bei konstanter Abschaltschwelle $I_{Peak}$ und vergrößerter Totzeit $T_{dead}$.

Die Abschaltschwelle $I_{Peak}$ kann von der Steuerschaltung 8 mittels einer Tabelle oder einer Funktion, welche jedem Wert des empfangenen Dimmsignals einen bestimmten Schwellenwert zuordnen, gesetzt werden. Die Tabelle bzw. Funktion kann vom Betreiber und/oder Hersteller beispielsweise entsprechend der zu betreibenden Last und/oder der Dimm-Anforderung aus einer Vielzahl von gespeicherten Tabellen/Funktionen ausgewählt werden. Ist die Steuerschaltung 4 in der Lage die Lastanforderungen (z.B. Typ des Leuchtmittels) selbst zu bestimmen, kann die Tabelle bzw. Funktion automatisch von der Steuerschaltung 4 selbst auf Grundlage einer solchen Bestimmung ausgewählt werden.

Mit der gesetzten Abschaltschwelle $I_{Peak}$ erfolgt durch die Steuerschaltung 4 im Betrieb eine Stabilisierung/Regelung der mittels des Signals $S_{is}$ ermittelten Abgabeleistung des Konverters 17 durch eine Anpassung der Totzeit $T_{dead}$, d.h. der Zeitspanne zwischen dem Zeitpunkt, ab dem sich der Energiespeicher nicht weiter entlädt und dem Zeitpunkt, bei dem der Schalter wiedereingeschaltet wird bzw. der Energiespeicher wieder geladen wird.

Sinkt auf Grund von, zum Beispiel, Temperatur- oder Spannungsschwankungen die mittels des Signals Sis ermittelte Abgabeleistung bei konstantem Dimmsignal/Dimmwert ab, verkürzt die Steuerschaltung 4 die Totzeit $T_{dead}$, um den Leistungsabfall auszugleichen bzw. ihm entgegenzuwirken.

Bei einem Ansteigen der Abgabeleistung mit konstantem Dimmsignal/Dimmwert wird von der Steuerschaltung 4 dagegen die Totzeit $T_{dead}$ erhöht. Zur Verringerung oder Erhöhung der Totzeit $T_{dead}$ erfolgt ein Wiedereinschalten des Schalters zu einem früheren bzw. späteren Zeitpunkt, wodurch sich die Dauer/Periode $T_{Period}$ eines Schaltzyklus verkürzt bzw. erhöht. Das Ändern/Anpassen der Totzeit $T_{dead}$ durch die Steuerschaltung 4 ähnelt einer Pulsfrequenzmodulation PFM, für deren Realisierung gewöhnlich zusätzliche Bauteile/Schaltungen nötig werden.

In dem diskontinuierlichen Betriebsmodus ist die Beziehung zwischen der Änderung der Totzeit $T_{dead}$ und der Änderung der Abgabeleistung vorzugsweise nicht linear. Eine Verschiebung des Wiedereinschaltzeitpunkts bei kleinen Totzeiten $T_{dead}$ bewirkt eine größere Änderung der Abgabeleistung als eine Verschiebung um ein identisches $\Delta t$ bei großen Totzeiten $T_{dead}$. Wird also bei der Regelung der Abgabeleistung die Totzeit $T_{dead}$ in gleichgroßen Schritten geändert, verschlechtert sich das Ansprechverhalten der Regelung bei größeren Totzeiten $T_{dead}$ (kleinen Abgabeleistungen), da ein Anpassungsschritt bei großen Totzeiten $T_{dead}$ eine sehr geringe Auswirkung auf die Änderung der Abgabeleistung hat und viele Anpassungsschritte/Schaltzyklen nötig werden.

Um das Ansprechverhalten in einfacher Weise zu verbessern, kann die Steuerschaltung 4 gemäß eines weiteren Ausführungsbeispiels der vorliegenden Erfindung zusätzlich dazu ausgelegt sein, den Verstärkungsfaktor der Regelschleife bei großen Totzeiten $T_{dead}$ zu erhöhen bzw. bei einer in aufeinanderfolgenden Schaltzyklen zunehmenden Totzeit $T_{dead}$ den Verstärkungsfaktor für die über eine Änderung des Wiedereinschaltzeitpunkts erfolgende Regelung der Abgabeleistung zu erhöhen. Eine Verringerung des Verstärkungsfaktors erfolgt bei einer in aufeinanderfolgenden Schaltzyklen abnehmenden Totzeit $T_{dead}$. Eine Änderung des Verstärkungsfaktors in Abhängigkeit von der Totzeit $T_{dead}$ kann über den gesamten, bei der Regelung nutzbaren Totzeitbereich oder nur für einen oder mehrere bestimmte Bereiche erfolgen. Der Verstärkungsfaktor hat einen Einfluss auf die für den nächsten Schaltzyklus zu setzende Totzeit $T_{dead}$ und kann so gewählt werden, dass die Beziehung zwischen der Änderung der Totzeit $T_{dead}$ und der Änderung der Abgabeleistung linear wird. Zusätzlich oder alternativ kann bei der Regelung die Steuerschaltung 4 zumindest bei bestimmten zu setzenden Totzeiten $T_{dead}$ und/oder bei bestimmten (starken) Lastschwankungen eine Änderung/Anpassung der Abschaltschwelle $I_{Peak}$ vornehmen. Ziel der Verwendung des Verstärkungsfaktors ist eine Verlangsamung des transienten Verhaltens bei großen Totzeiten $T_{dead}$ zu verhindern.

Die aktuelle Totzeit $T_{dead}$ kann aus dem von der Steuerschaltung 8 gesetzten Schaltzyklus oder der Ausschaltzeitdauer $T_{dead}$ des Schalters ermittelt und mittels einer Tabelle oder einer Funktion einem bestimmten Verstärkungsfaktor zugeordnet werden. Da die Totzeit $T_{dead}$ einen Einfluss auf Abgabeleistung hat, kann der Verstärkungsfaktor auch über das Signal $S_{is}$ bestimmt werden, wobei mittels einer oder mehrerer Tabellen oder Funktionen jedem Signalwert mit dem gesetzten Abschalt-Schwellenwert $I_{Peak}$ ein Verstärkungsfaktor zugeordnet wird.

In dem oben beschrieben Ausführungsbeispiel setzt die Steuerschaltung 4 die Abschaltschwelle $I_{Peak}$ in Abhängigkeit vom Dimmsignal anhand einer Funktion oder Tabelle. Bei einigen Anwendungen oder Konvertern kann es jedoch von Vorteil sein, zusätzlich zu der Abschaltschwelle $I_{Peak}$ auch die Totzeit $T_{dead}$ oder nur die Totzeit $T_{dead}$ in Abhängigkeit von Dimmsignal zu verändern.

In einem Ausführungsbeispiel des Betriebsgerätes gemäß der vorliegenden Erfindung erfolgt die Änderung der Totzeit $T_{dead}$ in Abhängigkeit vom Dimmsignal bei weitgehend konstanter Abschaltschwelle $I_{Peak}$ bis zu einem bestimmten Dimmwert oder bis zu einer bestimmten Abgabeleistung und unterhalb dieses Dimmwerts bzw. dieser Abgabeleistung erfolgt von der Steuerschaltung 4 die Änderung der Abschaltschwelle $I_{Peak}$ in Abhängigkeit vom Dimmsignal bei konstanter Totzeit $T_{dead}$ oder, wie oben beschrieben, mit einer Änderung der Totzeit $T_{dead}$ nur zur Stabilisierung der Abgabeleistung mit oder ohne eine Anpassung des Verstärkungsfaktors der Regelschleife.

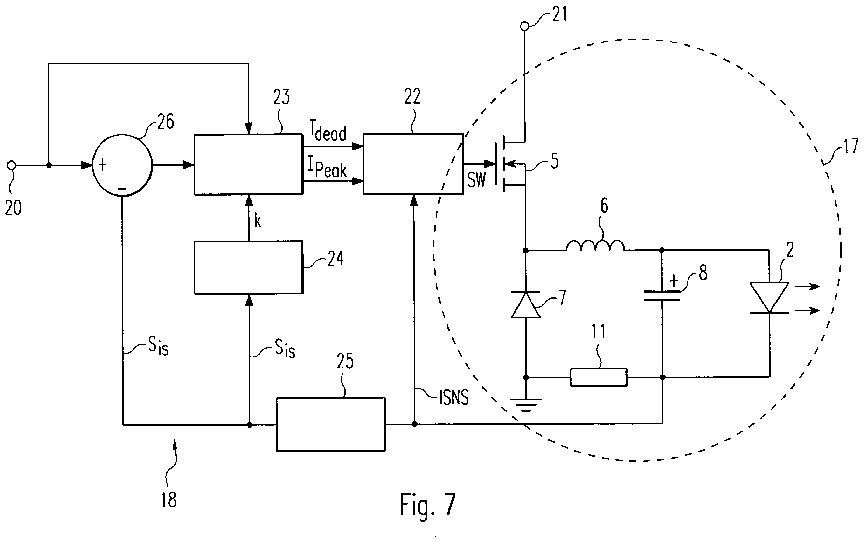

Fig. 7 zeigt ein erstes Ausführungsbeispiel des in Fig. 5 gezeigten Schaltreglers 3, bei dem der Konverter 17 ein Abwärtswandler ist. Dem Konverter 17 ist an dem Anschluss 21 eine Versorgungsspannung zuführbar, die eine Gleichspannung oder eine gleichgerichtete Wechselspannung sein kann. Der Schalter 5, die Spule 6, die Leuchtdiode 2 und der Messwiderstand 11 sind in Reihe zwischen dem Anschluss 21 und der Masse des Konverters 17 geschaltet. In dem in Fig. 7 gezeigten Schaltregler 3 ist die von dem Schaltregler 3 zu betreibende Leuchtdiode 14 direkt mit dem Konverter 17 verbunden. Alternativ kann der Schaltregler 3 Ausgangsanschlüsse aufweisen an denen eine oder mehrere Leuchtdioden anschließbar sind.

Ein Kondensator 8 ist parallel zu der Leuchtdiode 2 und die mit dem Schalter 5 und der Masse verbundene Diode 7 ist parallel zu der Spule 6, dem Kondensator 8 und dem Messwiderstand 11 angeordnet.

Die Steuerschaltung 4 des in Fig. 7 gezeigten Schaltreglers 3 weist eine Schaltzyklus-Steuereinrichtung 22, eine Abgabeleistungs-Steuereinrichtung 23, eine Verstärkungsfaktor-Ausgabeeinrichtung 24, ein Tiefpassfilter 25 und einen Komparator 26 zum Vergleichen eines die aktuelle Abgabeleistung (Istwert) anzeigenden Signals mit dem an dem Signaleingangsanschluss 10 anliegenden Dimmsignal, welches den Sollwert der Abgabeleistung anzeigt, auf.

Wird der Schalter 5 von der Schaltzyklus-Steuereinrichtung 22 eingeschaltet, fließt ein Strom von dem Anschluss 21, durch den Schalter 5, die Leuchtdiode 2 und den Messwiderstand 11. Die dabei über den Messwiderstand 11 abfallende Spannung wird der Schaltzyklus-Steuereinrichtung 22 als das den Stromfluss durch den Schalter 5 und den Energiespeicher (Spule 6) anzeigende Signal ISNS zugeführt.

Die Schaltzyklus-Steuereinrichtung 22 vergleicht die von dem Signal ISNS angezeigten Stromwerte mit dem von der Abgabeleistungs-Steuereinrichtung 23 gesetzten Abschalt-Schwellenwert $I_{Peak}$. Erreicht der Stromfluss den Schwellenwert $I_{Peak}$ schaltet die Schaltzyklus-Steuereinrichtung 22 den Schalter 5 aus. Nach dem Ausschalten des Schalters 5 treibt die Spule 6 den Strom mittels der Diode 7 weiter durch die Leuchtdiode 2.

Zeigt das Signal ISNS an, dass der Stromfluss auf null abgesunken ist, startet die Schaltzyklus-Steuereinrichtung 22 eine Zeitmessung und vergleicht die ablaufende Zeit mit der von der Abgabeleistungs-Steuereinrichtung 23 gesetzten Totzeit $T_{dead}$. Ist die vorgegebene Totzeit $T_{dead}$ abgelaufen, schaltet die Schaltzyklus-Steuereinrichtung 22 den Schalter 5 wieder ein und der Zyklus mit der Überwachung des Stromanstiegs und der Zeitmessung nach dem Abschalten beginnt erneut.

In einem Ausführungsbeispiel setzt die Abgabeleistungs-Steuereinrichtung 23 die Abschaltschwelle $I_{Peak}$ in Abhängigkeit von dem an dem Signaleingangsanschluss 10 anliegenden Dimmsignal anhand, zum Beispiel, einer Funktion oder Tabelle und regelt/stabilisiert die Abgabeleistung mit der Änderung der Totzeit $T_{dead}$ wie oben beschrieben. Hierfür wird das Signal ISNS durch den Tiefpass 25 gefiltert und dem Komparator 26 zum Vergleich mit dem Dimmsignal zugeführt.

Die Verstärkungsfaktor-Ausgabeeinrichtung 24 gibt auf Grundlage des von dem Tiefpass 25 gefilterten, die aktuelle Abgabeleistung anzeigenden Signals $S_{is}$ einen Verstärkungsfaktor k an die Abgabeleistungs-Steuereinrichtung 23 ab, welche basierend auf dem Dimmsignal, der von dem Komparator 26 ermittelten Regelabweichung und dem Verstärkungsfaktor k die Totzeit $T_{dead}$ und den Schwellenwert $I_{Peak}$ bestimmt und an die Schaltzyklus-Steuereinrichtung 22 abgibt. Eine Abgabe könnte nur bei einer nötigen Änderung der aktuell von der Schaltzyklus-Steuereinrichtung 22 verwendeten Totzeit $T_{dead}$ oder des aktuell verwendeten Schwellenwerts $I_{Peak}$ für die Steuerung des Schaltzyklus erfolgen. Die Steuerung des Schalters 5 bzw. Spulenstroms durch die Schaltzyklus-Steuereinrichtung 22 stellt eine innere Schleife und die Regelung der Abgabeleistung des Konverters 17 durch die Abgabeleistungs-Steuereinrichtung 23 eine äußere Schleife dar.

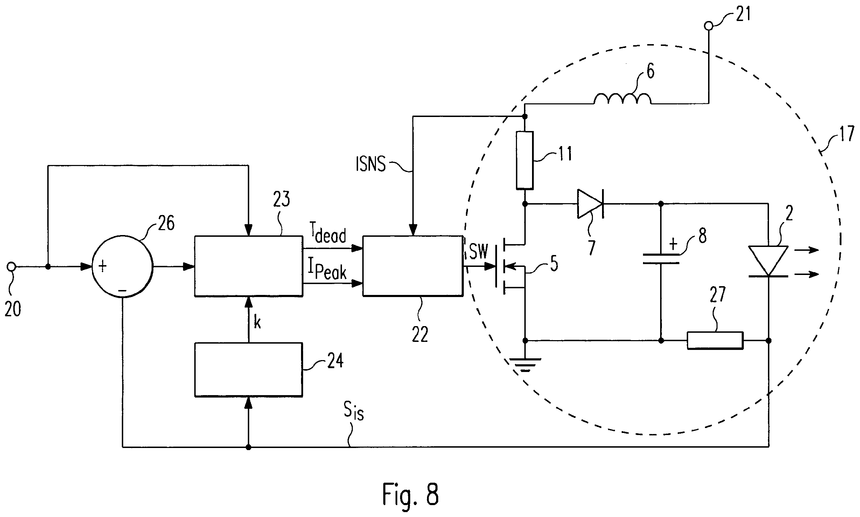

Fig. 8 zeigt ein zweites Ausführungsbeispiel des in Fig. 5 gezeigten Schaltreglers 3, bei dem der Konverter 17 ein Aufwärtswandler ist. In dem in Fig. 8 gezeigten Schaltregler 3 sind die Spule 6, der Messwiderstand 11 und der Schalter 5 in Reihe zwischen dem Anschluss 21 und der Masse des Konverters 17 geschaltet. Der für die Erzeugung des Signals ISNS vorgesehene Messwiderstand 11 kann zwischen dem Schalter 5 und der Masse des Konverters 17 oder zwischen dem Anschluss 21 und der Spule 6 angeordnet sein.

Ein weiterer Messwiderstand 27 zum Erzeugen des den Strom durch die Leuchtdiode 2 wiedergebenden Signals Sis ist mit der Masse des Konverters 17 und der Leuchtdiode 2 verbunden. Durch die Positionierung des Messwiderstands 27 zwischen dem Kondensator 8 und der Leuchtdiode 2 kann in diesem Beispiel auf den Tiefpass 25 verzichtet werden. Diese Maßnahme ist auch auf den in Fig. 7 gezeigten Schaltregler 3 anwendbar.

Die Regelung der Abgabeleistung durch die Abgabeleistungs-Steuereinrichtung 23 auf Grundlage des Dimmsignals, der von dem Komparator 26 ermittelten Regelabweichung und dem Verstärkungsfaktor k als auch die Ansteuerung des Schalters 5 durch die Schaltzyklus-Steuereinrichtung 22 auf Grundlage des Signals ISNS und der von der Abgabeleistungs-Steuereinrichtung 23 gesetzten Parameter (Totzeit $T_{dead}$ und Schwellenwert $I_{Peak}$) erfolgt in der oben beschriebenen Weise.

Die beschriebene Regelung/Stabilisierung der Abgabeleistung mit oder ohne Korrektur durch den Verstärkungsfaktor k kann auch bei den oben beschriebenen Ausführungsbeispielen, bei denen ein Wechsel zwischen Grenzbetriebsmodus und diskontinuierlichem Betriebsmodus in Abhängigkeit von der Abschaltschwelle erfolgt, angewendet werden.

**Patentansprüche**

1. Schaltregler zum Betreiben von einem oder mehreren Leuchtmitteln, aufweisend

   eine Steuerschaltung (4), die dazu ausgelegt ist, einen mit einer Spule gekoppelten Schalter (5) des Schaltreglers (3) anzusteuern,
   Mittel (11) zum direkten oder indirekten Erfassen des durch die Spule (6) fließenden Stroms und zur Zuführung eines diesen Strom wiedergebenden ersten Signals an die Steuerschaltung (4), wobei der Schalter (5) ausgeschaltet wird, wenn das erste Signal anzeigt, dass der Strom eine Abschaltschwelle ($I_{Peak}$) erreicht hat, wobei die Steuerschaltung (4) dazu ausgelegt ist, mittels Ansteuerung des Schalters (5) den Schaltregler (3)

   - in einem Grenzbetriebsmodus zu betreiben, wenn die durch das oder die Leuchtmittel (2) gebildete Last so hoch ist, dass die sich ergebende Abschaltschwelle ($I_{Peak}$) über einem vorgegebenen Mindestwert der Abschaltschwelle ($I_{Peak}$) liegt, und
   - in einem diskontinuierlichen Betriebsmodus mit dem Mindestwert der Abschaltschwelle ($I_{Peak}$) zu betreiben, wenn die durch das oder die Leuchtmittel (2) gebildete Last so niedrig ist, dass die sich bei einem Grenzbetriebsmodus ergebende Abschaltschwelle ($I_{Peak}$) unter dem vorgegebenen Mindestwert der Abschaltschwelle ($I_{Peak}$) liegen würde,

   wobei die Steuerschaltung (4) so eingerichtet ist, dass sie sowohl im Grenzbetriebsmodus als auch im diskontinuierlichen Betriebsmodus auf Basis des zugeführten, den Strom wiedergebenden ersten Signals den Schalter (5) ansteuert,
   **dadurch gekennzeichnet, dass** die Steuerschaltung (4) eingerichtet ist, in dem diskontinuierlichen Betriebsmodus einen Strommittelwert $I_{avg}$ für den Zeitabschnitt $T_{Period}$, in dem die Steuerschaltung den Schalter ein, aus und wieder einschaltet, entsprechend der Gleichung:

   $$I_{avg} = 0{,}5 \cdot I_{Peak} \cdot T_{Active} / T_{Period}$$

   zu ermitteln, wobei $I_{Peak}$ der vorgegebene Mindestwert der Abschaltschwelle ($I_{Peak}$) und $T_{Active}$ die Summe der Einschaltdauer $T_{On}$ und der Ausschaltdauer $T_{Off}$ des Schalters (5) sind, und die Steuerschaltung (4) eingerichtet ist, in dem diskontinuierlichen Betriebsmodus den Zeitpunkt des Wiedereinschaltens des Schalters (5) auf Grundlage des ermittelten Strommittelwerts $I_{avg}$ zu bestimmen.

2. Schaltregler zum Betreiben von einem oder mehreren Leuchtmitteln, aufweisend

   eine Steuerschaltung (4), die dazu ausgelegt ist, einen mit einer Spule gekoppelten Schalter (5) des Schaltreglers (3) anzusteuern,
   Mittel (11) zum direkten oder indirekten Erfassen des durch die Spule (6) fließenden Stroms und zur Zuführung eines diesen Strom wiedergebenden ersten Signals an die Steuerschaltung (4), wobei
   die Steuerschaltung (4) so eingerichtet ist, dass der Schalter (5) ausgeschaltet wird, wenn das erste Signal anzeigt, dass der Strom eine Abschaltschwelle ($I_{Peak}$) erreicht hat, und
   die Steuerschaltung (4) dazu ausgelegt ist, mittels Ansteuerung des Schalters (5) den Schaltregler (3)

   - in einem Grenzbetriebsmodus zu betreiben, wenn die durch das oder die Leuchtmittel (2) gebildete Last so hoch ist, dass die sich ergebende Abschaltschwelle ($I_{Peak}$) über einem vorgegebenen Mindestwert liegt, und
   - in einem diskontinuierlichen Betriebsmodus mit dem Mindestwert der Abschaltschwelle ($I_{Peak}$) abwechselnd mit dem Grenzbetriebsmodus zu betreiben, wenn die durch das oder die Leuchtmittel (2) gebildete Last so niedrig ist, dass die sich bei einem Grenzbetriebsmodus ergebende Abschaltschwelle ($I_{Peak}$) unter dem vorgegebenen Mindestwert der Abschaltschwelle ($I_{Peak}$) liegen würde,

   wobei die Steuerschaltung (4) so eingerichtet ist, dass sie sowohl im Grenzbetriebsmodus als auch im diskontinuierlichen Betriebsmodus auf Basis des zugeführten, den Strom wiedergebenden ersten Signals den Schalter (5) ansteuert,

**dadurch gekennzeichnet, dass** die Steuerschaltung (4) eingerichtet ist, in dem diskontinuierlichen Betriebsmodus einen Strommittelwert $I_{avg}$ für den Zeitabschnitt $T_{Period}$, in dem die Steuerschaltung den Schalter ein, aus und wieder einschaltet, entsprechend der Gleichung:

$$I_{avg} = 0,5 \cdot I_{Peak} \cdot T_{Active} / T_{Period}$$

zu ermitteln, wobei $I_{Peak}$ der vorgegebene Mindestwert der Abschaltschwelle ($I_{Peak}$) und $T_{Active}$ die Summe der Einschaltdauer $T_{On}$ und der Ausschaltdauer $T_{Off}$ des Schalters (5) sind, und die Steuerschaltung (4) eingerichtet ist, in dem diskontinuierlichen Betriebsmodus den Zeitpunkt des Wiedereinschaltens des Schalters (5) auf Grundlage des ermittelten Strommittelwerts $I_{avg}$ zu bestimmen.

3. Schaltregler nach Anspruch 2, wobei
die Steuerschaltung (4) dazu ausgelegt ist, von dem Betrieb, in dem der Schaltregler (3) in dem diskontinuierlichen Betriebsmodus mit dem Mindestwert der Abschaltschwelle ($I_{Peak}$) abwechselnd mit dem Grenzbetriebsmodus betrieben wird, in einen Betrieb, in dem der Schaltregler (3) in dem diskontinuierlichen Betriebsmodus mit dem Mindestwert der Abschaltschwelle ($I_{Peak}$) nicht abwechselnd mit dem Grenzbetriebsmodus betrieben wird, wechselt, wenn ein erstes Steuersignal von der Steuerschaltung (4) empfangen wurde oder wenn der Zeitabschnitt $T_{Period}$, in dem die Steuerschaltung (4) den Schalter (5) ein, aus und wieder einschaltet, einen Maximalwert annimmt.

4. Schaltregler nach Anspruch 3, wobei
die Steuerschaltung (4) dazu ausgelegt ist, von dem Betrieb, in dem der Schaltregler (3) in dem diskontinuierlichen Betriebsmodus mit dem Mindestwert der Abschaltschwelle ($I_{Peak}$) nicht abwechselnd mit dem Grenzbetriebsmodus betrieben wird, in den Betrieb, in dem der Schaltregler (3) in dem diskontinuierlichen Betriebsmodus mit dem Mindestwert der Abschaltschwelle ($I_{Peak}$) abwechselnd mit dem Grenzbetriebsmodus betrieben wird, wechselt, wenn ein zweites Steuersignal von der Steuerschaltung (4) empfangen wurde oder wenn der Zeitabschnitt $T_{Period}$, in dem die Steuerschaltung (4) den Schalter (5) ein, aus und wieder einschaltet, einen Minimalmalwert annimmt.

5. Schaltregler nach einem der Ansprüche 1 bis 4, wobei
die Steuerschaltung (4) einen Komparator zum Vergleichen des ersten Signals mit einem den Mindestwert repräsentierenden Signal aufweist.

6. Schaltregler nach einem der Ansprüche 1 bis 5, wobei
der Steuerschaltung (4) ein Dimmsignal zuführbar ist und die Steuerschaltung (4) eingerichtet ist, in dem Grenzbetriebsmodus die Abschaltschwelle ($I_{Peak}$) entsprechend dem Dimmsignal zu ändern.

7. Schaltregler nach Anspruch 6, wobei
die Steuerschaltung (4) eingerichtet ist, in dem diskontinuierlichen Betriebsmodus den Strommittelwert $I_{avg}$ nach der Ausschaltdauer $T_{Off}$ des Schalters (5) bis zum Zeitpunkt des Wiedereinschaltens des Schalters (5) kontinuierlich zu ermitteln und den ermittelten Strommittelwert $I_{avg}$ kontinuierlich mit einem dem Dimmsignal entsprechenden Wert zu vergleichen, um den Zeitpunkt des Wiedereinschaltens zu bestimmen.

8. Schaltregler nach einem der Ansprüche 1 bis 7, wobei

der Steuerschaltung (4) ein den Spannungsverlauf über dem Schalter (5) wiedergebendes Signal zuführbar ist, und
die Steuerschaltung eingerichtet ist.

**Claims**

1. A switching regulator for operating one illuminant or a plurality of illuminants, having
a control circuit (4), which is designed to control a switch (5) of the switching regulator (3), which switch is coupled to a coil,
means (11) for directly or indirectly detecting the current flowing through the coil (6) and for supplying a first signal, which reproduces this current, to the control circuit (4), wherein the switch (5) is switched off, if the first signal indicates, that the current has reached a switch-off threshold ($I_{Peak}$), wherein
the control circuit (4) is designed by means of controlling the switch (5) to operate the switching regulator (3)

    - in a limit operating mode, if the load formed by the illuminant or illuminants (2) is so high, that the resulting switch-off threshold ($I_{Peak}$) lies above a predetermined minimum value of the switch-off threshold ($I_{Peak}$), and
    - to operate in a discontinuous operating mode with the minimum value of the switch-off threshold ($I_{Peak}$), if the load formed by the illuminant or illuminants (2) is so low, that the switch-off threshold ($I_{Peak}$) resulting in a limit operating mode would lie below the predetermined minimum value of the switch-off threshold ($I_{Peak}$)

wherein the control circuit (4) is configured so that both in the limit operating mode as well as in the discontinuous operating mode it controls the switch (5) on the basis of the first signal supplied, which reproduces the current, **characterized in that**
the control circuit (4) is configured, in the discontinuous operating mode to determine an average current value $I_{avg}$ for the time period $T_{Period}$, in which the control circuit switches the switch on, off and back on again, in accordance with the equation:

$$I_{avg} = 0.5 \cdot I_{Peak} \cdot T_{Active} / T_{Period}$$

wherein $I_{Peak}$ is the predetermined minimum value of the switch-off threshold ($I_{Peak}$) and $T_{Active}$ is the sum of the switch-on time period $T_{On}$ and the switch-off time period Toff of the switch (5), and the control circuit (4) is configured in the discontinuous operating mode to determine the time of the switching back on of the switch (5) on the basis of the determined average current value $I_{avg}$.

2. The switching regulator for operating one illuminant or a plurality of illuminants, having
a control circuit (4), which is designed to control a switch (5) of the switching regulator (3), which switch is coupled to a coil,
means (11) for directly or indirectly detecting the current flowing through the coil (6) and for supplying a first signal, which reproduces this current, to the control circuit (4), wherein
the control circuit (4) is configured so that the switch (5) is switched off, if the first signal indicates, that the current has reached a switch-off threshold ($I_{peak}$), and
the control circuit (4) is designed by means of controlling the switch (5) to operate the switching regulator (3)

    - in a limit operating mode, if the load formed by the illuminant or illuminants (2) is so high, that the resulting switch-off threshold ($I_{Peak}$) lies above a predetermined minimum value, and
    - to operate in a discontinuous operating mode with the minimum value of the switch-off threshold ($I_{Peak}$) alternately with the limit operating mode, if the load formed by the illuminant or illuminants (2) is so low, that the switch-off threshold ($I_{Peak}$) resulting in a limit operating mode would lie below the predetermined minimum value of the switch-off threshold ($I_{Peak}$),

wherein the control circuit (4) is configured so that both in the limit operating mode as well as in the discontinuous operating mode it controls the switch (5) on the basis of the first signal supplied, which reproduces the current, **characterized in that**
the control circuit (4) is configured, in the discontinuous operating mode to determine an average current value $I_{avg}$ for the time period $T_{Period}$, in which the control circuit switches the switch on, off and back on again, in accordance with the equation:

$$I_{avg} = 0.5 \cdot I_{Peak} \cdot T_{Active} / T_{Period}$$

wherein $I_{Peak}$ is the predetermined minimum value of the switch-off threshold ($I_{Peak}$) and $T_{Active}$ is the sum of the switch-on time period $T_{On}$ and the switch-off time period Toff of the switch (5), and the control circuit (4) is configured in the discontinuous operating mode to determine the time of the switching back on of the switch (5) on the basis of the determined average current value $I_{avg}$.

3. The switching regulator according to Claim 2, wherein
the control circuit (4) is designed to change from the operation, in which the switching regulator (3) in the discontinuous operating mode with the minimum value of the switch-off threshold ($I_{Peak}$) is operated alternately with the limit operating mode, into an operation, in which the switching regulator (3) in the discontinuous operating mode with the minimum value of the switch-off threshold ($I_{Peak}$) is not operated alternately with the limit operating mode, if a first control signal was received from the control circuit (4) or if the time period ($T_{Period}$), in which the control circuit (4) switches the switch (5) on, off and back on again, assumes a maximum value.

4. The switching regulator according to Claim 3, wherein
the control circuit (4) is designed to change from the operation, in which the switching regulator (3) in the discontinuous operating mode with the minimum value of the switch-off threshold ($I_{Peak}$) is not operated alternately with the limit operating mode, into the operation, in which the switching regulator (3) in the discontinuous operating mode with the minimum value of the switch-off threshold ($I_{Peak}$) is operated alternately with the limit operating mode, if a second control signal was received from the control circuit (4) or if the time period ($T_{Period}$), in which the control circuit (4) switches the switch (5) on, off and back on again, assumes a minimum value.

5. The switching regulator according to any one of Claims 1 to 4, wherein
the control circuit (4) has a comparator for comparing the first signal with a signal representing the minimum value.

6. The switching regulator according to any one of Claims 1 to 5, wherein a dimming signal can be supplied to the control circuit (4) and the control circuit (4) is configured in the limit operating mode to change the switch-off threshold ($I_{Peak}$) in accordance with the dimming signal.

7. The switching regulator according to Claim 6, wherein
the control circuit (4) is configured in the discontinuous operating mode to continuously determine the average current value $I_{avg}$ after the switch-off time period Toff of the switch (5) until the time of the switching back on of the switch (5) and to continuously compare the determined average current value $I_{avg}$ with a value corresponding to the dimming signal, in order to determine the time of the switching back on.

8. The switching regulator according to any one of Claims 1 to 7, wherein
a signal reproducing the voltage course across the switch (5) can be supplied to the control circuit (4), and the control circuit is configured.

**Revendications**

1. Régulateur de commutation destiné à faire fonctionner un ou plusieurs moyens d'éclairage, comportant
un circuit de commande (4) qui est conçu pour piloter un commutateur (5), couplé à une bobine, du régulateur de commutation (3),
des moyens (11) destinés à détecter directement ou indirectement le courant traversant la bobine (6) et à acheminer au circuit de commande (4) un premier signal reproduisant ce courant, le commutateur (5) étant mis hors circuit quand le premier signal indique que le courant a atteint un seuil de coupure ($I_{peak}$),
le circuit de commande (4) étant conçu pour, au moyen du pilotage du commutateur (5), faire fonctionner le régulateur de commutation (3)

- dans un mode de fonctionnement limite quand la charge formée par le ou les moyens d'éclairage (2) est élevée au point que le seuil de coupure ($I_{Peak}$) qui en résulte est supérieur à une valeur minimale prescrite du seuil de coupure ($I_{Peak}$), et
- pour le faire fonctionner dans un mode de fonctionnement discontinu avec la valeur minimale du seuil de coupure ($I_{Peak}$) quand la charge formée par le ou les moyens d'éclairage (2) est faible au point que le seuil de coupure ($I_{Peak}$) résultant dans le cas d'un mode de fonctionnement limite serait inférieur à la valeur minimale prescrite du seuil de coupure ($I_{Peak}$),

le circuit de commande (4) étant constitué de telle sorte que, aussi bien dans le mode de fonctionnement limite que dans le mode de fonctionnement discontinu, il pilote le commutateur (5) sur la base du premier signal acheminé reproduisant le courant,
**caractérisé en ce que**
le circuit de commande (4) est constitué pour, dans le mode de fonctionnement discontinu, déterminer une valeur moyenne de courant $I_{avg}$ pour la période de temps $T_{period}$ dans laquelle le circuit de commande met le commutateur en circuit, hors circuit et de nouveau en circuit, conformément à l'équation :

$$I_{avg} = 0,5 \cdot I_{Peak} \cdot T_{Active} / T_{Period}$$

$I_{Peak}$ étant la valeur minimale prescrite du seuil de coupure ($I_{peak}$), et $T_{Active}$ étant la somme de la durée de mise en circuit $T_{on}$ et de la durée de mise hors circuit $T_{Off}$ du commutateur (5), et le circuit de commande (4) étant constitué pour, dans le mode de fonctionnement discontinu, définir l'instant de la remise en circuit du commutateur (5) sur la base de la valeur moyenne de courant $I_{avg}$ déterminée.

2. Régulateur de commutation destiné à faire fonctionner un ou plusieurs moyens d'éclairage, comportant

un circuit de commande (4) qui est conçu pour piloter un commutateur (5), couplé à une bobine, du régulateur de commutation (3),
des moyens (11) destinés à détecter directement ou indirectement le courant traversant la bobine (6) et à acheminer au circuit de commande (4) un premier signal reproduisant ce courant,
le circuit de commande (4) étant constitué de sorte que le commutateur (5) est mis hors circuit quand le premier signal indique que le courant a atteint un seuil de coupure ($I_{Peak}$), et
le circuit de commande (4) étant conçu pour, au moyen du pilotage du commutateur (5), faire fonctionner le régulateur de commutation (3)

- dans un mode de fonctionnement limite quand la charge formée par le ou les moyens d'éclairage (2) est élevée au point que le seuil de coupure ($I_{Peak}$) qui en résulte est supérieur à une valeur minimale prescrite, et
- pour le faire fonctionner dans un mode de fonctionnement discontinu avec la valeur minimale du seuil de coupure ($I_{Peak}$) de façon alternée avec le mode de fonctionnement limite quand la charge formée par le ou les moyens d'éclairage (2) est faible au point que le seuil de coupure ($I_{Peak}$) résultant dans le cas d'un mode de fonctionnement limite serait inférieur à la valeur minimale prescrite du seuil de coupure ($I_{peak}$),

le circuit de commande (4) étant constitué de telle sorte que, aussi bien dans le mode de fonctionnement limite que dans le mode de fonctionnement discontinu, il pilote le commutateur (5) sur la base du premier signal acheminé reproduisant le courant,
**caractérisé en ce que**
le circuit de commande (4) est constitué pour, dans le mode de fonctionnement discontinu, déterminer une valeur moyenne de courant $I_{avg}$ pour la période de temps $T_{period}$ dans laquelle le circuit de commande met le commutateur en circuit, hors circuit et de nouveau en circuit, conformément à l'équation :

$$I_{avg} = 0,5 \cdot I_{Peak} \cdot T_{Active} / T_{Period}$$

$I_{Peak}$ étant la valeur minimale prescrite du seuil de coupure ($I_{peak}$), et $T_{Active}$ étant la somme de la durée de mise en circuit $T_{on}$ et de la durée de mise hors circuit $T_{Off}$ du commutateur (5), et le circuit de commande (4) étant constitué pour, dans le mode de fonctionnement discontinu, définir l'instant de la remise en circuit du commutateur (5) sur la base de la valeur moyenne de courant $I_{avg}$ déterminée.

3. Régulateur de commutation selon la revendication 2,
le circuit de commande (4) étant conçu pour passer du mode dans lequel le régulateur de commutation (3) est mis en fonctionnement dans le mode de fonctionnement discontinu avec la valeur minimale du seuil de coupure ($I_{Peak}$) de façon alternée avec le mode de fonctionnement limite, à un mode dans lequel le régulateur de commutation (3) est mis en fonctionnement dans le mode de fonctionnement discontinu avec la valeur minimale du seuil de coupure ($I_{Peak}$) de façon non alternée avec le mode de fonctionnement limite quand un premier signal de commande a été reçu par le circuit de commande (4) ou quand la période de temps $T_{Period}$ dans laquelle le circuit de commande (4) met le commutateur (5) en circuit, hors circuit et de nouveau en circuit, adopte une valeur maximale.

4. Régulateur de commutation selon la revendication 3,
le circuit de commande (4) étant conçu pour passer du fonctionnement dans lequel le régulateur de commutation (3), dans le mode de fonctionnement discontinu avec la valeur minimale du seuil de coupure ($I_{peak}$), est mis en fonctionnement de façon non alternée avec le mode de fonctionnement limite, au fonctionnement dans lequel le régulateur de commutation (3), dans le mode de fonctionnement discontinu avec la valeur minimale du seuil de coupure ($I_{peak}$), est mis en fonctionnement de façon alternée avec le mode de fonctionnement limite quand un deuxième signal de commande a été reçu par le circuit de commande (4) ou quand la période de temps $T_{period}$ dans

**15**

laquelle le circuit de commande (4) met le commutateur (5) en circuit, hors circuit et de nouveau en circuit, adopte une valeur minimale.

5. Régulateur de commutation selon l'une des revendications 1 à 4,
le circuit de commande (4) comportant un comparateur destiné à comparer le premier signal avec un signal représentant la valeur minimale.

6. Régulateur de commutation selon l'une des revendications 1 à 5,
un signal de gradation pouvant être acheminé au circuit de commande (4), et le circuit de commande (4) étant constitué pour, dans le mode de fonctionnement limite, faire varier le seuil de coupure ($I_{Peak}$) en fonction du signal de gradation.

7. Régulateur de commutation selon la revendication 6,
le circuit de commande (4) étant constitué pour, dans le mode de fonctionnement discontinu, déterminer de façon continue la valeur moyenne de courant $I_{avg}$ selon la durée de mise hors circuit $T_{Off}$ du commutateur (5) jusqu'à l'instant de la remise en circuit du commutateur (5), et comparer de façon continue la valeur moyenne de courant $I_{avg}$ déterminée avec une valeur correspondant au signal de gradation afin de définir l'instant de la remise en circuit.

8. Régulateur de commutation selon l'une des revendications 1 à 7,
un signal reproduisant l'allure de la tension aux bornes du commutateur (5) pouvant être acheminé au circuit de commande (4), et
le circuit de commande étant constitué.

Fig. 1

Fig. 2

18

Fig. 3

Fig. 4

Fig. 5

Fig. 6

Fig. 7

EP 3 262 896 B1

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013152368 A1

- EP 2512208 A2

**In der Beschreibung aufgeführte Nicht-Patentliteratur**

- **SHENG LIU et al.** An adaptive on-time controlled boost LED driver with high dimming ratio. *IECON 2012 - 38th Annual Conference on IEEE Industrial Electronics Society,* 25. Oktober 2012, 210, , 214